# EUROPEAN PATENT APPLICATION

(11) **EP 1 810 850 A2**
(43) Date of publication of application: **25.07.2007**
(21) Application number: 06118856.1
(22) Date of filing: 14.08.2006
(51) Int. Cl.: B60C 23/04

(54) **Tyre air pressure detection system for rubber-tyred container gantry crane**

(30) Priority: 23.01.2006 CN 200620039119 U
(71) Applicant: Shanghai Zhenhua Port Machinery Co. Ltd., Shanghai District, Shanghai 200125 (CN)
(72) Inventor: He, Gang, 200125, Shanghai (CN); Gao, Qing, 200125, Shanghai (CN); Bi, Qiang, 200125, Shanghai (CN)
(74) Representative: Modiano, Micaela Nadia

(57) **Abstract**

A tyre air pressure detection system for rubber-tyred container gantry crane, comprising a plurality of sensor units each having a sensor unit ID installed at the inflating valve of each tyres or inside each tyres, and a central processing unit. Each of the sensor units comprises a MCU, a pressure sensor and a wireless transmitter circuit connecting to the MCU; the sensor unit detects the pressure of the tyre, and transmits the pressure information and the sensor unit ID to the central processing unit periodically; the sensor unit compares the current pressure with a predetermined pressure, and transmits the current pressure, an alarm information and the sensor ID to the central processing unit if the difference value exceeds a first threshold; the sensor unit compares the current pressure with the last detected pressure, and transmits the current pressure, an alarm information and the sensor ID the central processing unit if the difference value exceeds a second threshold; the central processing unit comprises a MCU and a wireless receiver circuit connecting to said MCU; the central processing unit receives the pressure transmitted from the sensor unit for processing, and outputs an alarm when the alarm information is received.

## Description

### Field of Invention

The invention relates to a tyre air pressure detection system for rubber-tyred container gantry crane (RTG).

### Background

The problem of insufficient air pressure exists in most of the tyres of the large travel mechanism of the current rubber-tyred container gantry crane (RTG). Because the tyres having insufficient air pressure cannot be inflated in time, cracking, delaminating and plumping of these tyres often occur when these tyres are used, thereby it shortens the lifetime of the tyres, and causes accidents. Currently, the device for detecting the air pressure of the tyre and issuing an alarm does not exist in RTG tyre application field.

### Summary of Invention

The object of the present invention is to provide a tyre air pressure detection system for RTG for addressing the above problems. The system can detect air pressure inside the tyre, and outputs an alarm when the air pressure decreases to an abnormal level to indicate manually intervening.

According to the present invention, providing a tyre air pressure detection system for rubber-tyred container gantry crane, comprising:a plurality of sensor units installed at the inflating valve of each tyre or inside each tyre; a central processing unit; wherein each of the sensor units has a sensor unit ID; and each of said sensor units comprises a MCU, a pressure sensor and a wireless transmitter circuit connecting to said MCU; the sensor unit detects the pressure of the tyre, and transmits the pressure information and the sensor unit ID to the central processing unit periodically; the sensor unit compares a current pressure with a predetermined pressure, and transmits the current pressure, an alarm information and the sensor ID to the central processing unit if the difference value exceeds a first threshold; and the sensor unit compares the current pressure with a last detected pressure, and transmits the current pressure, an alarm information and the sensor ID to the central processing unit if the difference value exceeds a second threshold; the central processing unit comprises a MCU and a wireless receiver circuit connecting to the MCU; the central processing unit receives the pressure transmitted from the sensor unit for processing, and issues an alarm when receives the alarm information.

According to an embodiment, the central processing unit outputs an indication signal on not receiving a pressure from the sensor units for a time exceeding a predetermined duration.

According to an embodiment, the system further comprises at least one relay unit, each of the at least one relay unit comprises a MCU, and a wireless receiver circuit and a wireless transmitter circuit connecting to the MCU.

According to an embodiment, the wireless receiver circuits and the wireless transmitter circuits are composed of radio frequency integrated chips.

According to an embodiment, the central processing unit further comprises an alarm module connecting to the MCU of the central processing unit.

According to an embodiment, central processing unit further comprises a display unit connecting to the MCU of the central processing unit.

According to an embodiment, the central processing unit further comprises a keyboard connecting to the MCU of the central processing unit.

The tyre air pressure detection system of the rubber-tyred container gantry crane of the invention collects the air pressure information of the tyre through detecting the air pressure of the tyre, and outputs an alarm when the pressure of the tyre decreases significantly or the decreases gradually to indicate manually intervening so as to prevent cracking, delaminating and plumping of the tyre caused by insufficient pressure of the tyre.

### Brief Description of Drawings

The specific embodiments of the invention will be described by incorporating the following drawings, wherein:
Fig. 1 is a structural block diagram of an embodiment of a tyre air pressure detection system in a rubber-tyred container gantry crane of the invention; and
Fig. 2 is a structural block diagram of another embodiment of a tyre air pressure detection system in the rubber-tyred container gantry crane of the invention.

### Detailed Description of Preferred Embodiments

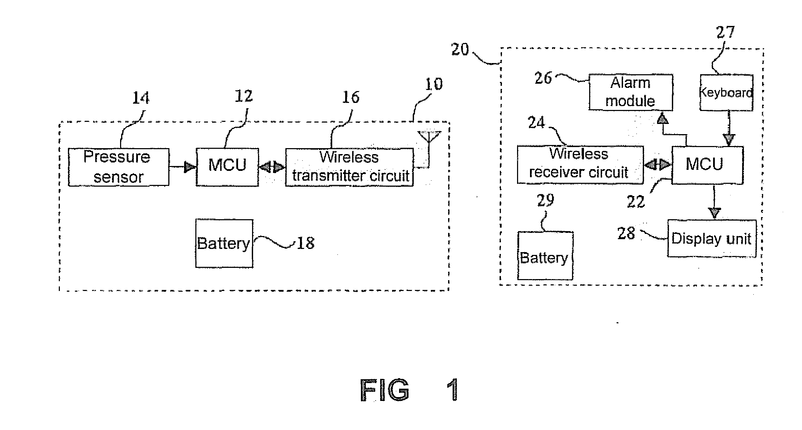

As shown in Fig. 1, one embodiment of the tyre air pressure detection system in the rubber-tyred container gantry crane of the invention comprises a sensor unit 10 and a central processing unit 20. Wherein the sensor unit 10 is installed at the inflating valve of each tyres or inside each tyres, and each sensor units has a sensor unit ID. The information including the sensor unit ID to be identified by the central processing unit 20 can be transmitted by the sensor unit 10 so that the respective sensor units are identified and numbered by the central processing unit 20.

Each of the sensor units 10 comprises a MCU 12, a pressure sensor 14, a wireless transmitter circuit 16, and a battery 18. The pressure sensor 14 and the wireless transmitter circuit 16 are connected to MCU. The wireless transmitter circuit 16 is composed of radio frequency integrated chips. The pressure of the tyre is detected by the sensor unit 10, and the pressure information and the sensor unit ID are transmitted to the central processing unit 20 periodically, that is according to a constant time interval. The sensor unit 10 compares the current pressure with the predetermined pressure set by the system by, and transmits the current pressure, an alarm information and the sensor unit ID to the central processing unit 20 if the difference value exceeds a first threshold; this is used for detecting a condition in which a large amount of air expels from the tyre suddenly (for example, cracking) to make the air pressure of the tyre be quickly lower than the predetermined pressure set by the system. The sensor unit 10 also compares the current pressure with the last detected pressure, and transmits the current pressure, an alarm information and the sensor unit ID if the difference value exceeds a second threshold; this is used for detecting a condition in which the air expels from the tyre slowly (for example, the inflating valve becomes flexible) to make the air pressure of the tyre decrease gradually.

The central processing unit 20 can be disposed on the control console of the driving room or other places for being viewed conveniently, preferably, it can be connected to the central control room of RTG, and the current pressure condition of the respective tyres can be transmitted to RTG via the communication interface. Of course, the central processing unit 20 should be disposed at a place where the radio frequency signals transmitted by the sensor unit 10 can be detected. Said central processing unit 20 comprises a MCU 22, a wireless receiver circuit 24, and an alarm module 26, a keyboard 27, a display unit 28, and a battery 29. Wherein the wireless receiver circuit 24, the alarm module 26, the keyboard 27, and the display unit 28 are connected to MCU 22. The wireless receiver circuit 24 is composed of radio frequency integrated chips. The pressure information transmitted by the sensor unit 10 is received by MCU 22 via the wireless receiving circuit 24 for processing, if the tyre is at an abnormal state, for example, the pressure decreases a large amount suddenly (expelling a large amount of air), or the speed of the pressure reduction exceeds a normal range (expelling slowly the air), then an alarm signal will be outputted to the alarm module 26. The alarm module 26 can issue an audible alarm or can alarm by using alarm lamp.

If the signal outputted by the sensor unit 10 is not received by the sensor unit 10 during a predetermined duration, an indication signal will be outputted to indicate the user to check whether the respective sensor units 10 are failed or not.

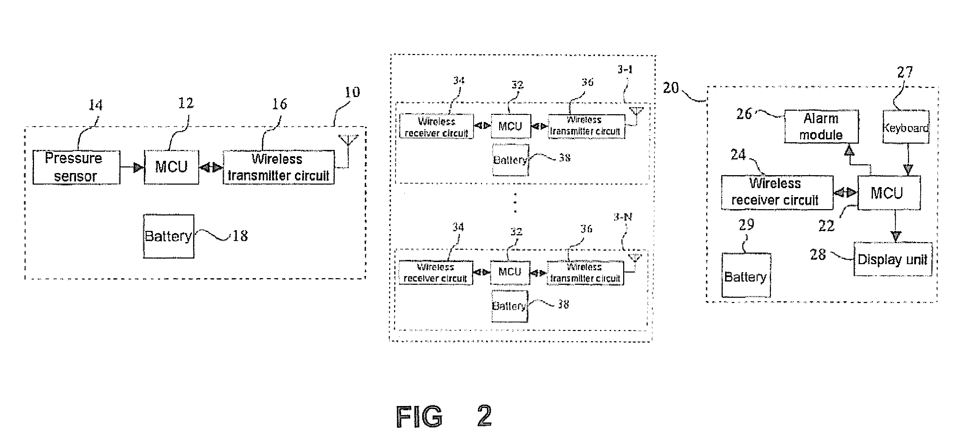

In another embodiment as shown in Fig. 2, the system further comprises relay units 3-0-3-N, the value of N is decided based on the requirements of the covering range of the respective relay units and the communication distance of the system. Each of the relay units 3-0~3-N comprises a MCU 32, a wireless receiver circuit 34 and a wireless transmitter 36 connected with said MCU, and a battery 38. Wherein the wireless receiver circuit 34 and the wireless transmitter 36 are composed of radio frequency integrated chips. The respective relay units 3-0~3-N are disposed separately within the crane, and are responsible for relaying the information from the sensor unit 10, and have the function of extending the communication distance and improving the path. The information transmitted by the sensor unit 10 is received by MCU 32 via the wireless receiver circuit 34, and is relayed by the wireless transmitter circuit 36.

## Claims

1. A tyre air pressure detection system for rubber-tyred container gantry crane, comprising:
a plurality of sensor units installed at the inflating valve of each tyre or inside each tyre;
a central processing unit;
wherein each of the sensor units has a sensor unit ID; and
each of said sensor units comprises a MCU, a pressure sensor and a wireless transmitter circuit connecting to said MCU; the sensor unit detects the pressure of the tyre, and transmits the pressure information and the sensor unit ID to the central processing unit periodically; the sensor unit compares a current pressure with a predetermined pressure, and transmits the current pressure, an alarm information and the sensor ID to the central processing unit if the difference value exceeds a first threshold; and the sensor unit compares the current pressure with a last detected pressure, and transmits the current pressure, an alarm information and the sensor ID to the central processing unit if the difference value exceeds a second threshold;
the central processing unit comprises a MCU and a wireless receiver circuit connecting to the MCU; the central processing unit receives the pressure transmitted from the sensor unit for processing, and issues an alarm when receives the alarm information.

2. The system of Claim 1, wherein the central processing unit outputs an indication signal on not receiving a pressure from the sensor units for a time exceeding a predetermined duration.

3. The system of Claim 1, wherein it further comprises at least one relay unit, each of the at least one relay unit comprises a MCU, and a wireless receiver circuit and a wireless transmitter circuit connecting to the MCU.

4. The system of Claim 1 or Claim 3, wherein the wireless receiver circuits and the wireless transmitter circuits are composed of radio frequency integrated chips.

5. The system of Claim 1, wherein the central processing unit further comprises an alarm module connecting to the MCU of the central processing unit.

6. The system of Claim 1, wherein the central processing unit further comprises a display unit connecting to the MCU of the central processing unit.

7. The system of Claim 1, wherein the central processing unit further comprises a keyboard connecting to the MCU of the central processing unit.
